# FASCICULE DE BREVET EUROPEEN

(11) **EP 4 018 602 B1**
(45) Date de publication et mention de la délivrance du brevet: **08.01.2025**
(21) Numéro de dépôt: 20747421.4
(22) Date de dépôt: 31.07.2020
(51) Int. Cl.: H04W 24/08

(54) **PROCÉDÉ D'ESTIMATION DU NOMBRE DE PERSONNES PRÉSENTES DANS UNE ZONE GÉOGRAPHIQUE DONNÉE**
VERFAHREN ZUR SCHÄTZUNG DER ANZAHL VON IN EINEM BESTIMMTEN GEOGRAFISCHEN GEBIET VORHANDENEN PERSONEN
METHOD FOR ESTIMATING THE NUMBER OF PEOPLE PRESENT IN A GIVEN GEOGRAPHICAL AREA

(30) Priorité: 19.08.2019 FR 1909258
(43) Date de publication de la demande: 29.06.2022
(73) Titulaire: Institut Mines Telecom, 91120 Palaiseau (FR)
(72) Inventeur: AFIFI, Hossam, 75013 Paris (FR); MAROT, Michel, 91140 Villebon-sur-Yvette (FR)
(74) Mandataire: Cabinet Nony
(86) Numéro de dépôt international: PCT/EP2020/071728
(87) Numéro de publication internationale: WO 2021/032447

(56) Documents cités:
- EP-A1- 3 278 580
- EP-B1- 3 278 580
- WO-A1-2013/128081
- WO-A1-2018/113968
- US-A1- 2015 334 523

## Description

La présente invention concerne un procédé d'estimation du nombre de personnes présentes dans une zone géographique donnée et un dispositif permettant de mettre en oeuvre ce procédé.

### Technique antérieure

Une méthode possible pour réaliser un décompte de personnes est de les décompter manuellement. Cette méthode est notamment utilisée pour évaluer le taux de remplissage d'une rame de train, mais est fastidieuse et nécessite au moins un opérateur humain.

On connaît également des méthodes d'évaluation du trafic routier utilisant des systèmes de caméras ou de boucles à induction. Ces méthodes nécessitent de lourds investissements pour être mises en place et une fois le système mis en place il ne peut pas être déplacé simplement.

Enfin, des méthodes permettant de compter précisément le nombre de terminaux connectés à un instant donné à un réseau cellulaire donné sont théoriquement possibles, mais ne sont réalisables que par les opérateurs téléphoniques opérant sur ce réseau. En effet, seuls ceux-ci peuvent avoir accès au nombre exact de connexions à une station de base d'une cellule du réseau à un moment donné. Cette méthode n'est pas utilisée dans la pratique car dans elle est très coûteuse à mettre en place vu le nombre important de stations de base que comporte un réseau. Les opérateurs téléphoniques procèdent plutôt à un comptage basé sur les comptes-rendus d'appels. Cette solution étant liée à l'opérateur, elle donne un échantillonnage très restreint et de surcroît lié aux stations de base.

Une méthode de surveillance en temps réel de l'évolution de la population urbaine est exposée dans la publication *Real-time urban population monitoring using pervasive sensor network* rédigée par Thakur et al. Cette méthode repose sur la mesure du nombre de *Cell Radio Network Temporary Identifier* (en abrégé C-RNTI) alloués dans une cellule autour d'une station de base. Cette méthode présente plusieurs désavantages. Tout d'abord, elle permet de repérer uniquement les utilisateurs de la norme LTE. Ensuite, la zone où est réalisée le décompte est nécessairement celle couverte par une cellule d'une station de base d'un opérateur téléphonique, ce qui limite le choix et l'étendue de la zone où l'on réalise le décompte.

US2015/334523 A1 divulgue un procédé pour estimer le nombre de personnes présentes dans une zone géographique donnée sur base à l'aide d'un estimateur qui récolte des indicateurs du nombre de message de signalisation envoyés sur différentes technologies cellulaires (GSM, Wi-Fi) et évalue le nombre de personnes présentes à l'aide d'une équivalence.

### Exposé de l'invention

En conséquence, il existe un besoin pour bénéficier d'une méthode d'estimation du nombre de personnes dans une zone géographique donnée qui soit indépendante des opérateurs téléphoniques, c'est-à-dire qui ne nécessite pas l'accès à des données appartenant à ces opérateurs, et qui soit facile à mettre en oeuvre.

### Résumé de l'invention

L'invention vise à répondre à ce besoin et elle y parvient, selon l'un de ses aspects, grâce à un procédé pour estimer le nombre de personnes présentes dans une zone géographique donnée, au moins une partie de ces personnes étant équipée de terminaux cellulaires communiquant sur au moins un réseau, la communication des terminaux s'effectuant selon au moins deux standards prédéfinis de communication, le procédé comportant les étapes consistant à :
(a) à partir d'une analyse du trafic sur le ou les réseaux présents dans ladite zone prédéfinie, effectuée à l'aide d'au moins un analyseur de trafic localisé dans cette zone et de portée choisie en fonction de la zone à couvrir, détecter pour chacun desdits standards au moins un indicateur représentatif de l'activité d'un terminal sur ce ou ces réseaux et fonctionnant selon au moins ce standard,
(b) déduire des indicateurs ainsi détectés, un décompte du nombre de terminaux cellulaires présents dans la zone,
(c) estimer le nombre de personnes présentes dans ladite zone, à partir au moins d'une loi de corrélation entre le nombre de terminaux cellulaires ainsi décomptés et le nombre correspondant de personnes présentes dans ladite zone.

L'invention repose sur l'estimation d'un nombre de terminaux cellulaires dans une zone choisie par l'utilisateur, distincte des cellules des stations de base appartenant aux opérateurs téléphoniques.

L'invention permet d'estimer simplement un nombre de personnes présentes dans une zone donnée en se fondant sur le nombre de téléphones cellulaires présents. En particulier, ce procédé permet d'évaluer de façon automatisée le nombre de personnes dans une zone sans nécessiter la présence d'une personne physique dans la zone pour réaliser ce décompte.

L'invention permet d'estimer le taux de remplissage d'un lieu, par exemple un stade. Elle permet également de détecter le passage de personnes dans un espace ou la tenue d'un événement exceptionnel regroupant plusieurs personnes dans un même lieu.

L'un des avantages du procédé selon l'invention est qu'il permet de comptabiliser les terminaux cellulaires indépendamment du standard selon lequel ils communiquent. L'analyseur de réseau (en anglais « *sniffer* ») peut écouter le trafic sur les bandes de fréquence de chacun des standards de communication. Cet analyseur est capable de lire les informations obtenues du réseau et celles émises par les terminaux cellulaires et sans fil. Le traitement des données issues de l'analyseur peut se faire par voie logicielle par tout circuit de traitement des données adapté, comportant un processeur, par exemple un micro-ordinateur ou une carte dédiée. Le traitement des données par voie logicielle permet d'analyser les messages qui transitent sur le réseau et de déterminer la nature de ces messages. Lorsque les messages ne sont pas cryptés, comme les demandes d'accès aléatoire par exemple, une lecture des données transmises par le message est possible.

On peut alors repérer différents indicateurs qui sont décomptés afin d'évaluer le nombre de terminaux cellulaires présents dans la zone géographique. On peut par exemple décompter le nombre de procédures de connexion qui ont lieu sur le réseau.

L'analyse du trafic peut comporter, comme mentionné ci-dessus, la détection d'un indicateur correspondant à une demande d'accès aléatoire au réseau d'un terminal cellulaire.

Cet indicateur est particulièrement simple à repérer par l'analyseur de réseau puisque, dans les standards de téléphonie mobile, les demandes d'accès aléatoire ne sont pas cryptées. On peut ainsi facilement les décompter et estimer le nombre de terminaux cellulaires dans la zone qui sont connectés à une station de base.

On peut avantageusement relever pour chaque standard au moins un indicateur et ainsi relever par exemple d'autres indicateurs tel que les identifiants des terminaux cellulaires qui transitent sur le réseau comme les identifiants CRNTI, TLLI ou P-TMSI.

Le nombre de terminaux cellulaires peut ne pas correspondre exactement au nombre de personnes présentes dans la zone, et cela sera souvent le cas dans la pratique, d'un point de vue statistique. En effet, toutes les personnes présentes dans la zone ne font pas nécessairement usage du réseau, ni n'en font usage au même instant. De plus, le procédé ne permet pas de détecter lorsqu'une personne quitte la zone. Il est donc nécessaire de reposer sur une loi de corrélation entre le nombre de personnes effectivement présentes et le nombre de terminaux cellulaires décomptés dans la zone pour pouvoir déduire, à partir des terminaux cellulaires dénombrés, une estimation du nombre de personnes réellement présentes dans la zone. Cette loi de corrélation résulte d'une observation préalable de la réalité ou est établie par analogie avec des situations similaires par exemple d'un point de vue statistique.

L' analyse du trafic comporte la détection d'un indicateur correspondant à une réponse à une demande d'accès aléatoire d'un terminal cellulaire.

La comptabilisation des réponses aux demandes d'accès aléatoires des terminaux cellulaires permet de fiabiliser le décompte des demandes d'accès aléatoire réalisé par l'analyseur de réseau. Ces messages de réponse ne sont pas cryptés. Si les deux décomptes réalisés sont égaux, alors le risque qu'une erreur ai eu lieu lors des décomptes est réduit.

Afin d'obtenir un résultat plus fiable, on décompte de préférence uniquement les réponses aux demandes d'accès aléatoires des terminaux cellulaires qui ont été préalablement relevées par l'analyseur de réseau.

La loi de corrélation peut avoir été générée à partir de l'observation de données réelles, notamment par apprentissage d'un réseau de neurones.

On peut fournir en entrée du réseau de neurones un jeu de données correspondant au nombre de personnes réellement présentes dans la zone et un autre jeu correspondant au décompte du nombre de terminaux cellulaires réalisé lors de la mise en oeuvre du procédé. Le réseau de neurones peut alors déduire des différents jeux de données qu'on lui fournit successivement une loi de corrélation permettant de lier les deux ensembles de données. Suite à cet apprentissage, on peut déduire du nombre de terminaux cellulaires décomptés par l'analyseur de réseau, une estimation du nombre de personnes présentes en appliquant la loi de corrélation ainsi générée. Le réseau de neurones permet ainsi de corriger les mesures réalisées par l'analyseur de réseau.

Les données servant à l'apprentissage découlent par exemple d'une analyse d'image et/ou d'un comptage manuel.

Pour établir le jeu de données correspondant au nombre de personnes réellement présentes dans la zone, on peut faire un comptage effectif des personnes présentes dans la zone, par exemple par comptage manuel comme cela se fait dans le transport ferroviaire, ou par utilisation de caméras ou de tout autre moyen de comptage. Par exemple, pendant une période donnée, on compte manuellement le nombre de personnes présentes dans une rame de train tous les lundis entre 8h et 9h, et l'on enregistre le nombre de terminaux détectés en mettant en oeuvre le procédé de détection selon l'invention. On obtient une loi de corrélation entre le nombre de terminaux détectés et le nombre de personnes qui peut être utilisée ensuite pour estimer le remplissage de la rame à tout moment.

Avantageusement, l'analyse du trafic s'effectue sans décryptage préalable des données transitant sur les réseaux analysés.

L'analyseur de réseau relève tous les messages non cryptés et les transmet au circuit de traitement des données. Dans les différents standards selon lesquels les terminaux cellulaires communiquent, les demandes d'accès aléatoire et les réponses à ces demandes sont transmises en clair à la station de base de la cellule où se trouvent les terminaux cellulaires. L'analyseur de réseau peut donc facilement les relever et les transmettre au circuit de traitement des données pour estimer le nombre de terminaux cellulaires présents dans la zone. Le décryptage des messages n'est donc pas nécessaire pour réaliser l'estimation du nombre de terminaux cellulaires. Le procédé objet de l'invention peut donc être mis en oeuvre indépendamment des opérateurs téléphoniques. En particulier, le procédé objet de l'invention peut permettre d'estimer un nombre de terminaux cellulaires présents dans une zone géographique donnée sans avoir accès aux identifiants des terminaux cellulaires comme par exemple le numéro IMSI (*International Mobile Subscriber Identity*)*.*

On peut placer l'analyseur de réseau à toute position voulue, indépendamment de la répartition des cellules et des stations de base. L'analyseur de réseau peut être mobile. Il peut ainsi être facilement déplacé et disposé dans tout lieu où l'on souhaite estimer le nombre de personne présentes.

L'analyseur de réseau comporte un récepteur qui est distinct de l'émetteur/récepteur d'une station de base. L'analyseur de réseau n'étant pas lié à une station de base, les terminaux cellulaires détectés n'appartiennent pas à un seul opérateur téléphonique. L'analyseur de réseau peut être disposé de telle sorte que les limites de sa zone de couverture ne sont pas confondues avec les limites de la zone de couverture d'une station de base. Par exemple, l'analyseur de réseau est placé de telle sorte que sa zone de couverture se trouve entre les cellules de plusieurs stations de base. En variante, il peut être placé de telle sorte que sa zone de couverture soit incluse dans une cellule d'une station de base.

Les standards prédéfinis de communication sont par exemple choisis parmi les suivants : 2G, en particulier GSM, 2,5G, 3G, en particulier UMTS, 4G, en particulier LTE, 5G, WiFi, BLUETOOTH.

Si l'un au moins des terminaux cellulaires communique selon un standard de communication 2G sur le réseau, l'indicateur comptabilisé lors de l'analyse peut être le nombre de messages RR IMMEDIATE ASSIGNEMENT envoyés par une station de base en réponse aux demandes d'accès aléatoire relevées sur le réseau.

En 2G, une demande d'accès aléatoire suppose l'envoi d'un train de données (en anglais « *burst* ») sur le canal RACH *(Random Access Channel).* Ce train de données est accessible en clair sur le canal. Après quoi, s'il n'y a pas de collision, un message RR IMMEDIATE ASSIGNMENT est envoyé sur l'AGCH (*Access Grant Channel).* Ce dernier message n'est pas crypté, et contient des informations de connexion nécessaires pour décrire le canal à utiliser pour communiquer, comme par exemple la fréquence de la porteuse ou le numéro d'intervalle attribué (en anglais *slot).*

L'accès à la ressource est nécessaire pour initier un appel mais aussi dans d'autres situations comme par exemple suite à une recherche de personne (en anglais *« paging* ») ou lors d'une mise à jour de localisation. Après un paging, une procédure d'accès aléatoire doit avoir lieu, comme pour un appel sortant normal. Des mises à jour de localisation sont faites soit périodiquement, soit sur événement. Elles requièrent l'établissement d'un canal radio et nécessitent donc aussi une procédure d'accès aléatoire. Dans une procédure de mise à jour de localisation, la station de base émet un RR IMMEDIATE ASSIGNEMENT, le terminal cellulaire émet en retour un MM LOCATION UPDATING REQUEST en clair sur le canal indiqué dans le message RR IMMEDIATE ASSIGNEMENT.

En revanche, en cas de transfert intercellulaire (en anglais « *handover* »), les informations sur le canal dans la cellule cible, c'est-à-dire la cellule vers laquelle se dirige l'utilisateur qui change de cellule, ne sont pas transmises en clair et aucune procédure d'accès aléatoire n'est prévue. On ne peut donc pas suivre le départ ou l'arrivée d'un client lors d'un *handover.*

Si l'un au moins des terminaux cellulaires communique selon un standard de communication 2,5G sur le réseau, l'indicateur comptabilisé lors de l'analyse peut être le nombre de messages PACKET UPLINK ASSIGNEMENT envoyés par une station de base en réponse aux demandes d'accès aléatoires relevés sur le réseau.

En 2,5G, l'accès au réseau nécessite la réservation de ressources, soit statiques soit dynamiques, et auparavant un accès aléatoire, sauf dans le cas d'un appel descendant. L'accès aléatoire se fait sur le canal RACH ou PRACH *(Physical Random Access Chanel)* avec un PACKET CHANNEL REQUEST émis par le terminal cellulaire et est suivi par l'émission d'un PACKET UPLINK ASSIGNMENT sur le PAGCH de la part de la station de base. Les échanges avant l'authentification du terminal cellulaire ne sont pas cryptés. On peut donc mesurer le nombre de PACKET UPLINK ASSIGNMENT qui sont émis dans la zone.

Dans le cas de l'établissement d'un flux descendant, c'est-à-dire depuis la station de base vers le terminal cellulaire, l'accès peut se faire sans paging (cas d'un mobile dans l'état READY) ou avec paging (cas d'un mobile dans l'état STANDBY). Avec paging, une phase d'accès aléatoire du terminal cellulaire est nécessaire. Sans paging, la station de base envoie directement au terminal cellulaire un PACKET DOWNLINK ASSIGNMENT sur le PAGCH. En principe, ce message doit être chiffré, mais ce n'est pas toujours le cas selon les opérateurs et les pays. On peut aussi mesurer de PACKET DOWNLINK ASSIGNMENT pour estimer le nombre de terminaux cellulaire dans une zone.

Si aucun message n'est chiffré, l'indicateur d'activité qui peut être décompté lors de l'analyse du trafic peut être le nombre d'identifiants TLLI ou P-TMSI. Ces identifiants sont obtenus à partir des phases d'attachement du terminal cellulaire au réseau, et mis à jour à travers la lecture des PACKET RESOURCE REQUEST sur le PACCH, PACKET UPLINK ASSIGNMENT sur le PACCH, PACKET UPLINK Ack/Nack sur le PACCH et le PACKET DOWNLINK ASSIGNMENT DU PAGCH .

Si l'un au moins des terminaux cellulaires communique selon un standard de communication 3G, 4G et/ ou 5G sur le réseau, l'indicateur comptabilisé lors de l'analyse peut être le nombre de messages RRC CONNECTION SETUP envoyés par une station de base en réponse aux demandes d'accès aléatoires relevés sur le réseau.

En 3G, 4G et 5G, les connexions RRC supposent une procédure d'accès aléatoire soit sur le RACH soit sur le PRACH. Une connexion RRC est notamment faite pour l'inscription au réseau, pour certains cas de localisation LOCATION UPDATING ou pour le détachement du réseau.

Dans les standards 3G, les handovers sont difficiles à détecter, les fréquences des porteuses étant données dans un message chiffré. En revanche, dans les standards 4G, un accès aléatoire est aussi nécessaire lorsqu'il y a un handover. Il est donc possible de détecter les handover lorsqu'un terminal cellulaire communique selon un standard 4G.

Si l'un au moins des terminaux cellulaires communique selon le standard de communication WiFi sur le réseau, l'indicateur comptabilisé lors de l'analyse peut être le nombre de messages (association-request, probe-request) et/ou le nombre d'adresses MAC différentes connecté à ce réseau.

Dans la norme Wifi 802.11, le point d'accès diffuse des messages périodiques appelés balises qu'il envoie aux terminaux. Les terminaux peuvent être cellulaires, comme par exemple des téléphones mobiles, ou non, comme par exemple des ordinateurs. Les terminaux répondent aux balises par des demandes d'association. Les points d'accès qui ne diffusent pas de balises sont sollicités par des messages 'probe-request' qui sont émis par les terminaux. Les points d'accès sont obligés de répondre à ces sollicitations. Cette procédure de demande d'association est non cryptée. La réponse à une demande d'association 'association response' peut être chiffrée. Les entêtes des trames qui circulent sur le réseau sont visibles par l'analyseur de réseau. Ce dernier peut en déduire la présence et une estimation du nombre des équipements et aussi le type d'équipement, par exemple cellulaire ou non.

Avantageusement, le procédé mis en oeuvre est adapté aux modes infrastructure, adhoc (incluant aussi le WifiDirect) et Mesh (chaque station émet des balises spécifiques) du réseau wifi.

Le décompte du nombre de terminaux connectés à un réseau Wifi peut permettre de fiabiliser l'estimation du nombre de personnes réalisée. En particulier, le fait de décompter en parallèle les connexions des terminaux aux réseaux cellulaires et aux bornes Wifi permet de disposer de deux jeux de données à partir duquel le nombre de personnes est estimé.

On peut par exemple fournir le jeu de données correspondant au décompte du nombre de terminaux connectés en Wifi au réseau de neurones précité pour enrichir le modèle et affiner la loi de corrélation générée.

Par ailleurs, afin d'améliorer le décompte de personnes, on peut détecter l'activité des terminaux d'émission et/ou de réception de signaux selon l'un des standards Bluetooth dans la zone géographique et acquérir un jeu de donnée Bluetooth correspondant. On peut alimenter le réseau de neurone avec ce jeu de données Bluetooth.

Avantageusement, l'analyseur de trafic comporte au moins une antenne, le gain et/ou la directivité de cette antenne étant choisis pour couvrir la zone géographique donnée.

On peut déterminer la zone géographique dans laquelle on procède à une estimation du nombre de personnes en jouant sur la position de l'analyseur de réseau et sa portée. On peut modifier la portée de l'antenne réceptrice de l'analyseur en modifiant sa puissance et sa directivité. La zone de couverture de l'analyseur de réseau est ainsi paramétrable. La puissance de réception de l'antenne peut être adaptée pour limiter la zone de réception. On peut ainsi réaliser un comptage localisé.

On peut sélectionner le gain de l'antenne du récepteur et sa directivité pour étendre plus ou moins le rayon de couverture de la zone. Cependant, il peut s'avérer difficile d'établir une relation directe entre couverture géographique et puissance de l'antenne réceptrice indépendamment de la position de la station de base du réseau et de la configuration des lieux. En effet, en fonction de la proximité à une station de base et de la densité du réseau, les terminaux cellulaires émettent avec une puissance plus ou moins élevée. Il peut donc être utile de réaliser une calibration préalable de l'analyseur de réseau en fonction notamment des scénarios considérés et/ou de la localisation choisie lors de la mise en oeuvre du procédé selon l'invention.

Le décompte du nombre d'indicateurs représentatifs de l'activité d'un terminal mobile est réalisé par incrémentation pendant la période de mesure.

La détection du ou des indicateurs représentatifs de l'activité d'un terminal se fait ainsi par exemple en continue pendant un temps de mesure donné, au cours duquel le décompte du nombre des indicateurs est incrémenté ; le procédé peut comporter une étape de décrémentation de ce décompte, lorsque le temps de mesure est écoulé.

L'analyse du trafic réalisé ne permet pas de détecter lorsqu'une personne quitte la cellule sans avoir libéré le canal occupé. C'est le cas notamment lors d'un handover. L'analyse du trafic réalisée ne permet pas non plus de détecter le cas où une personne libère un canal avant de quitter la zone. En effet, les messages envoyés lors de la libération du canal radio sont chiffrés, ils ne sont donc pas détectables par l'analyseur. Il peut donc être utile de décrémenter le décompte du nombre d'indicateurs représentatifs de l'activité d'un terminal mobile entre deux périodes de mesure.

La décrémentation du décompte du nombre d'indicateurs représentatifs de l'activité d'un terminal peut se faire en réinitialisant le décompte.

On peut réinitialiser périodiquement le décompte des indicateurs, par exemple en le fixant à zéro. Lorsque la décrémentation se fait de manière discontinue dans le temps pendant la durée totale d'analyse du trafic, on peut parler de mécanisme à « fenêtre sautante ».

La décrémentation du décompte du nombre d'indicateurs représentatifs de l'activité d'un terminal peut aussi se faire en décrémentant d'un nombre prédéfini ce décompte.

Par exemple, on peut décrémenter de un le décompte du nombre de terminaux après une durée prédéterminée suite à la détection d'une personne dans une zone. La durée peut être fixe ou déterminée par une loi aléatoire. Par exemple, on décrémente systématiquement de un toutes les minutes.

Dans ce mode de réalisation, on considère que toute personne dont la présence est détectée disparaît après une durée déterminée. Cette durée peut être fixe ou déterminée par une loi aléatoire. Lorsque la décrémentation se fait de manière continue dans le temps pendant la durée de l'analyse de trafic, on peut parler de mécanisme à « fenêtre glissante ».

La zone géographique donnée est par exemple une zone mobile, notamment une rame de train et/ou un bus.

Le procédé selon l'invention peut permettre de réaliser une estimation du taux d'occupation d'une rame de train. On place par exemple l'analyseur de réseau dans la rame de train et on ajuste le gain de l'antenne afin de circonscrire la zone à la rame de train uniquement.

La zone géographique donnée peut encore être une zone immobile, notamment une gare, un stade et/ou une place.

Ainsi, on peut placer l'analyseur de réseau dans une gare pour estimer la fréquentation de la gare ou d'une ligne passant par cette gare.

Le procédé objet de l'invention peut permettre d'estimer le taux de remplissage d'un lieu publique comme par exemple un stade, un lieu d'exposition ou autre. Ce procédé peut également servir à estimer le nombre de personnes assistants à une manifestation, en le plaçant par exemple sur une place ou dans une rue.

On peut appliquer le procédé selon l'invention pour suivre un flux de personnes. En comparant le nombre de personnes estimé dans des zones proches, on peut en déduire un déplacement des personnes entre ces zones. Pour mettre en oeuvre ce procédé, on peut faire en sorte que plusieurs analyseurs de réseau transmettent le nombre de personnes estimé dans leur zone à un même circuit de traitement de données qui réalise la comparaison et en tire une information relative au flux de personnes.

L'invention a ainsi encore pour objet un procédé de détection d'un flux de personnes entre au moins deux zones géographiques proches, un analyseur de réseau étant placé dans chacune des zones, le procédé comportant les étapes consistant à :
- estimer le nombre de personnes présentes et/ou de terminaux cellulaires dans chacune desdites zones en appliquant à tout le moins les étapes (a) et (b) du procédé selon l'invention,
- comparer les valeurs estimées dans chacune des zones pour en déduire l'orientation et/ou l'intensité du flux de personnes entre les deux zones.

L'invention a encore pour objet, selon un autre de ses aspects, un dispositif d'estimation du nombre de personnes présentes dans une zone géographique donnée, au moins une partie de ces personnes étant équipée de terminaux cellulaires communiquant sur au moins un réseau, la communication des terminaux s'effectuant selon au moins deux standards prédéfinis de communication, notamment pour la mise en oeuvre du procédé selon l'invention tel que défini plus haut, le dispositif comportant :
- un récepteur local comportant un analyseur de trafic permettant d'écouter le trafic sur au moins un réseau et de déterminer le nombre et la nature des messages non cryptés qui y transitent,
- un circuit de traitement des données issues du récepteur configuré pour :
   (a) à partir d'une analyse du trafic sur le ou les réseaux présents dans ladite zone prédéfinie, effectuée à l'aide d'au moins l'analyseur de trafic localisé dans cette zone et de portée choisie en fonction de la zone à couvrir, détecter pour chacun desdits standards au moins un indicateur représentatif de l'activité d'un terminal sur ce ou ces réseaux et fonctionnant selon au moins l'un desdits standards,
   (b) déduire des indicateurs ainsi détectés, un décompte du nombre de terminaux cellulaires présents dans la zone,
   (c) estimer le nombre de personnes présentes dans ladite zone, à partir au moins d'une loi de corrélation entre le nombre de terminaux cellulaires ainsi décomptés et le nombre correspondant de personnes présentes dans ladite zone.

Ce dispositif peut capter les signaux radio qui sont à sa portée et ainsi détecter les messages qui sont échangés sur le réseau. Ce dispositif est notamment adapté à scanner une ou plusieurs bandes de fréquence, en particulier les bandes qui correspondent aux différents standards de téléphonie mobiles.

Les signaux captés par le récepteur local sont ensuite transmis à un circuit de traitement de données. Ce circuit peut notamment comprendre un processeur. Ce circuit est par exemple adapté à analyser les signaux captés et détecter des indicateurs représentatifs de l'activité d'un terminal cellulaire. Par exemple, le circuit identifie les demandes de connexions captées et les décompte.

Le récepteur local du dispositif selon l'invention peut comporter un périphérique universel de radio logiciel. Ce dernier permet de communiquer avec le circuit de traitement de données via une connexion USB ou Ethernet. Le circuit de traitement de données est par exemple un système comportant un processeur, tel qu'un micro-ordinateur ou une carte dédiée. Ce circuit de traitement de données peut exécuter un logiciel radio pour réaliser l'analyse des signaux radio captés.

Le rayon de couverture du dispositif peut être paramétrable. Il peut être choisi en fonction de la localisation géographique et de la densité du réseau.

Le dispositif est compact et portable. Il peut être placé simplement à n'importe quelle localisation.

L'invention a encore pour objet, selon un autre de ses aspects un véhicule ou une salle d'accueil du publique équipé d'un dispositif selon l'invention précité, l'antenne est par exemple configurée pour que sa couverture coïncide sensiblement avec l'étendue de la zone du véhicule ou de la salle recevant les personnes.

### Brève description des dessins

L'invention pourra être mieux comprise à la lecture de la description détaillée qui va suivre, d'un exemple de réalisation non limitatif de celle-ci, et à l'examen du dessin annexé, sur lequel :
[Fig 1] la figure 1 est un schéma d'une mise en oeuvre de l'invention,
[Fig 2] la figure 2 est une vue schématique d'un exemple de dispositif selon l'invention,
[Fig 3] la figure 3 est un schéma fonctionnel d'un exemple de réseau de neurones utilisé pour la mise en oeuvre de l'invention,
[Fig 4] la figure 4 est un graphique illustrant un exemple de résultat obtenu suite à une mise en oeuvre du procédé selon l'invention,
[Fig 5] la figure 5 est une figure analogue à la figure 4.

### Description détaillée

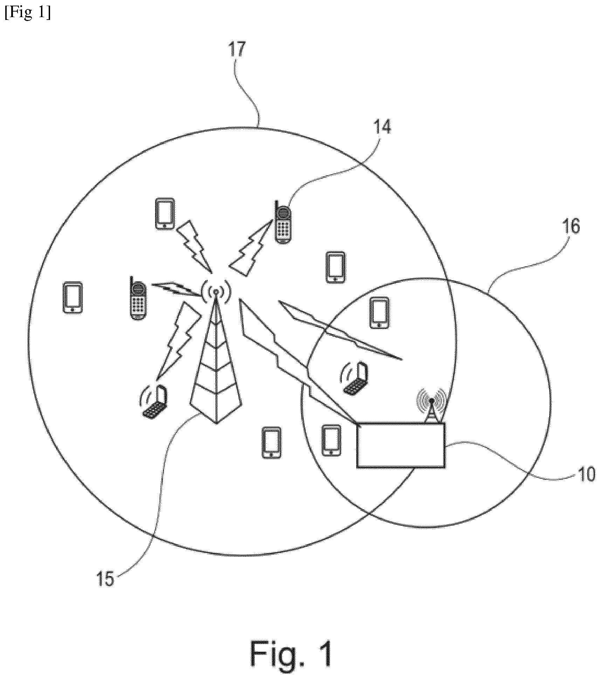

La figure 1 illustre un exemple de mise en oeuvre du procédé objet de l'invention. Dans cet exemple, des terminaux cellulaires 14 sont situés dans une cellule 17 et communiquent avec une station de base 15 d'un réseau de téléphonie mobile. Les terminaux cellulaires 14 peuvent communiquer selon un standard 2G, 3G, 4G et/ou 5G.

Un dispositif 10 selon l'invention est positionné de telle sorte que l'intersection entre sa zone de couverture 16 et la cellule 17 de la station de base 15 est non nulle. La zone de couverture 16 du dispositif 10 peut être totalement incluse dans la cellule 17 de la station de base 15 ou partiellement incluse.

Le dispositif 10 comporte un récepteur local 11, par exemple un périphérique universel de radio logiciel. Le récepteur 11 comporte une antenne 12. Le récepteur local 11 est adapté à écouter les messages échangés sur les bandes de fréquences dédiées à la téléphonie mobile. Il détecte en particulier les messages de demande d'accès aléatoire et les réponses à ces demandes d'accès. Les demandes d'accès aléatoires ne sont pas cryptées et sont donc disponibles en clair sur l'interface air. En revanche, les réponses à ces demandes d'accès peuvent être cryptées.

Le récepteur 11 transmet les signaux captés lors de l'écoute à un circuit de traitement des données 13. Ce dernier identifie la nature des messages transmis, en particulier s'il s'agit d'un message de demande d'accès aléatoire ou une réponse à une telle demande.

L'analyse des messages détectés par le récepteur 11 permet de réaliser un décompte des messages de demande d'accès aléatoire et des réponses à ces demandes. A partir de ce décompte, on peut déduire une estimation du nombre de terminaux cellulaires 14 présents dans la zone de couverture 16 du dispositif 10.

Le circuit de traitement de données 13 peut ensuite appliquer une loi de corrélation qui lie le nombre de terminaux cellulaires détectés dans la zone de couverture 16 et le nombre de personnes présentes dans cette zone 16.

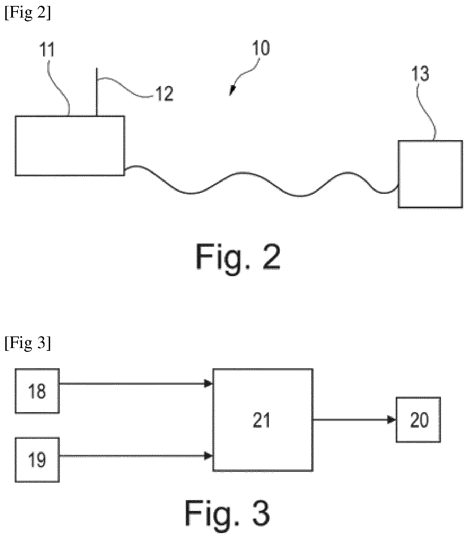

Cette loi de corrélation a par exemple été générée par un réseau de neurones 21. L'apprentissage de ce réseau de neurones 21 est illustré à la figure 3. On fournit en entrée 18 un jeu de données issu d'une observation réelle du nombre de personnes dans la zone. Cette observation réelle est par exemple réalisée par analyse d'images ou par comptage manuel. On fournit également en entrée 19 un jeu de données issu de l'estimation réalisée par le dispositif 10. L'apprentissage du réseau de neurones 21 se fait en fournissant plusieurs jeux de données. Le réseau de neurones 21 génère en sortie 20 une loi de corrélation qui permet de déduire du nombre estimé de terminaux cellulaires 14 une estimation du nombre de personnes présentes dans la zone 16.

### Exemple

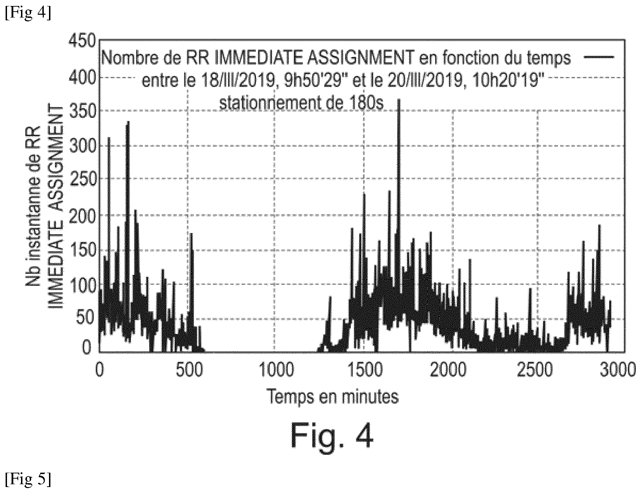

On réalise un test en plaçant le dispositif selon l'invention dans un lieu d'exposition pendant deux jours. Ce dispositif comporte un périphérique universel de radio logiciel USRP National Instrument NI USRP-2920. On calibre le dispositif de telle sorte que la zone de couverture du dispositif correspond à l'étendue du lieu. La première nuit le lieu est fermé au public. En revanche, la deuxième nuit précède un événement exceptionnel nécessitant des préparations à réaliser pendant la nuit. On détecte et comptabilise les messages RR IMMEDIATE ASSIGNMENT en GSM transmis dans la zone de couverture. On a illustré à la figure 4 l'évolution du nombre de ces messages en fonction du temps. On remarque une absence de messages détectés durant la première nuit, du lundi 18 mars au mardi 19 mars. Au contraire, on constate de l'activité dans la nuit suivante. On peut donc établir un lien entre le nombre de messages RR IMMEDIATE ASSIGNMENT et la présence de personnes dans le lieu.

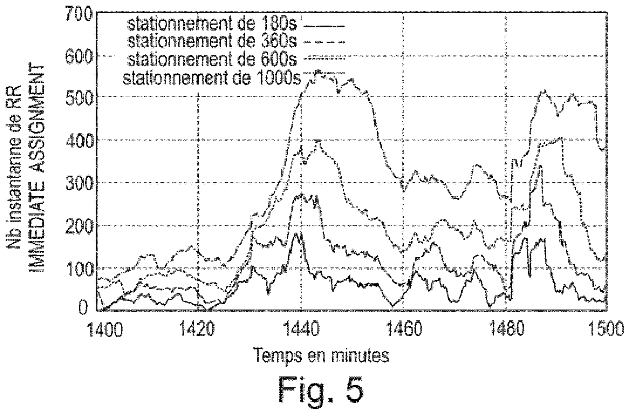

La figure 5 est un graphique représentant l'évolution du nombre de RR IMMEDIATE ASSIGNMENT détecté en fonction du temps et pour différents temps de stationnement des personnes (180s, 360s, 600s, 100s). On constate que le nombre de message RR IMMEDIATE ASSIGNMENT détecté varie avec la durée de stationnement fixée. Il peut donc être utile de prendre ce paramètre en compte lors de l'établissement de la loi de corrélation, en particulier en fournissant ce paramètre au réseau de neurones dans le cas où un tel réseau est utilisé pour générer la loi de corrélation.

Bien entendu, l'invention n'est pas limitée aux exemples de réalisation qui viennent d'être décrits. Par exemple, on peut appliquer l'invention à d'autres standards de communication, notamment de téléphonie, que ceux mentionnés.

L'expression « comportant un » doit être comprise comme étant synonyme de « comprenant au moins un ».

## Revendications

1. Procédé pour estimer le nombre de personnes présentes dans une zone géographique donnée (16), au moins une partie de ces personnes étant équipée de terminaux cellulaires (14) communiquant sur au moins un réseau, la communication des terminaux (14) s'effectuant selon au moins deux standards prédéfinis de communication, le procédé comportant les étapes consistant à :
(a) à partir d'une analyse du trafic sur le ou les réseaux présents dans ladite zone prédéfinie (16), effectuée à l'aide d'au moins un analyseur de trafic localisé dans cette zone et de portée choisie en fonction de la zone à couvrir, détecter pour chacun desdits standards au moins un indicateur représentatif de l'activité d'un terminal (14) sur ce ou ces réseaux et fonctionnant selon au moins ce standard,
(b) déduire des indicateurs ainsi détectés, un décompte du nombre de terminaux cellulaires (14) présents dans la zone (16),
(c) estimer le nombre de personnes présentes dans ladite zone, à partir au moins d'une loi de corrélation entre le nombre de terminaux cellulaires (14) ainsi décomptés et le nombre correspondant de personnes présentes dans ladite zone (16), **caractérisé en ce que** l'analyse du trafic comporte la détection d'un indicateur correspondant à une réponse à une demande d'accès aléatoire d'un terminal cellulaire (14).

2. Procédé selon la revendication précédente, l'analyse du trafic comportant la détection d'un indicateur correspondant à une demande d'accès aléatoire au réseau d'un terminal cellulaire (14).

3. Procédé selon l'une quelconque des revendications précédentes, la loi de corrélation ayant été générée à partir de l'observation de données réelles, notamment par apprentissage d'un réseau de neurones (21), les données servant à l'apprentissage découlant notamment d'une analyse d'image et/ou d'un comptage manuel.

4. Procédé selon l'une quelconque des revendications précédentes, l'analyse du trafic s'effectuant sans décryptage préalable des données transitant sur les réseaux analysés.

5. Procédé selon l'une quelconque des revendications précédentes, les standards prédéfinis de communication étant choisis parmi les suivants : 2G, en particulier GSM, 2,5G, 3G, en particulier UMTS, 4G, en particulier LTE, 5G, WiFi, BLUETOOTH.

6. Procédé selon l'une quelconque des revendications précédentes, l'un au moins des terminaux cellulaires (14) communiquant selon un standard de communication 2G sur le réseau, l'indicateur comptabilisé lors de l'analyse étant le nombre de messages RR IMMEDIATE ASSIGNEMENT envoyés par une station de base (15) en réponse aux demandes d'accès aléatoire relevées sur le réseau.

7. Procédé selon l'une quelconque des revendications 1 à 5, l'un au moins des terminaux cellulaires (14) communiquant selon un standard de communication 2,5G sur le réseau, l'indicateur comptabilisé lors de l'analyse étant le nombre de messages PACKET UPLINK ASSIGNEMENT envoyés par une station de base (15) en réponse aux demandes d'accès aléatoires relevés sur le réseau.

8. Procédé selon l'une quelconque des revendications 1 à 5, l'un au moins des terminaux cellulaires (14) communiquant selon un standard de communication 3G, 4G et/ ou 5G sur le réseau, l'indicateur comptabilisé lors de l'analyse étant le nombre de messages RRC CONNECTION SETUP envoyés par une station de base (15) en réponse aux demandes d'accès aléatoires relevés sur le réseau.

9. Procédé selon l'une quelconque des revendications 1 à 5, l'un au moins des terminaux cellulaires (14) communiquant selon le standard de communication WiFi sur le réseau, l'indicateur comptabilisé lors de l'analyse étant le nombre de messages (association-request, probe-request) et/ou le nombre d'adresses MAC différentes connecté à ce réseau.

10. Procédé selon l'une quelconque des revendications précédentes, l'analyseur de trafic comportant au moins une antenne (12), le gain et/ou la directivité de cette antenne étant choisis pour couvrir la zone géographique donnée.

11. Procédé selon l'une quelconque des revendications précédentes, la détection du ou des indicateurs représentatifs de l'activité d'un terminal se faisant en continue pendant un temps de mesure donné au cours duquel le décompte du nombre de ces indicateurs est incrémenté, le procédé comportant une étape de décrémentation de ce décompte lorsque le temps de mesure est écoulé, la décrémentation du décompte du nombre d'indicateurs représentatifs de l'activité d'un terminal (14) se faisant notamment en réinitialisant le décompte et/ou en décrémentant d'un nombre prédéfini le décompte.

12. Procédé selon l'une quelconque des revendications précédentes, la zone géographique donnée (16) étant une zone mobile, notamment une rame de train et/ou un bus ou une zone immobile, notamment une gare, un stade et/ou une place.

13. Procédé de détection d'un flux de personnes entre au moins deux zones géographiques proches, un analyseur de réseau étant placé dans chacune des zones, le procédé comportant les étapes consistant à :
- estimer le nombre de personnes présentes et/ou de terminaux cellulaires (14) dans chacune desdites zones en appliquant à tout le moins les étapes (a) et (b) du procédé selon l'une des revendications 1 à 12,
- comparer les valeurs estimées dans chacune des zones pour en déduire l'orientation et/ou l'intensité du flux de personnes entre les deux zones.

14. Dispositif (10) d'estimation du nombre de personnes présentes dans une zone géographique donnée (16), au moins une partie de ces personnes étant équipée de terminaux cellulaires (14) communiquant sur au moins un réseau, la communication des terminaux s'effectuant selon au moins deux standards prédéfinis de communication, notamment pour la mise en oeuvre du procédé selon les revendications 1 à 12, le dispositif comportant :
- un récepteur local comportant un analyseur de trafic permettant d'écouter le trafic sur au moins un réseau et de déterminer le nombre et la nature des messages non cryptés qui y transitent,
- un circuit de traitement des données issues du récepteur configuré pour:
(a) à partir d'une analyse du trafic sur le ou les réseaux présents dans ladite zone prédéfinie, effectuée à l'aide d'au moins l'analyseur de trafic localisé dans cette zone et de portée choisie en fonction de la zone à couvrir, détecter pour chacun desdits standards au moins un indicateur représentatif de l'activité d'un terminal sur ce ou ces réseaux et fonctionnant selon au moins l'un desdits standards,
(b) déduire des indicateurs ainsi détectés, un décompte du nombre de terminaux cellulaires (14) présents dans la zone (16),
(c) estimer le nombre de personnes présentes dans ladite zone, à partir au moins d'une loi de corrélation entre le nombre de terminaux cellulaires (14) ainsi décomptés et le nombre correspondant de personnes présentes dans ladite zone (16), **caractérisé en ce que** l'analyse du trafic comporte la détection d'un indicateur correspondant à une réponse à une demande d'accès aléatoire d'un terminal cellulaire (14).

15. Véhicule ou salle d'accueil du publique équipé d'un dispositif (10) selon la revendication précédente, l'antenne (12) étant configurée pour que sa couverture coïncide sensiblement avec l'étendue de la zone du véhicule ou de la salle recevant les personnes.

## Patentansprüche

1. Verfahren zum Schätzen der Anzahl von in einem bestimmten geografischen Gebiet (16) vorhandenen Personen, wobei mindestens ein Teil dieser Personen mit zellularen Endgeräten (14) ausgestattet ist, die in mindestens einem Netz kommunizieren, wobei die Kommunikation der Endgeräte (14) gemäß mindestens zwei vordefinierten Kommunikationsstandards erfolgt, wobei das Verfahren die Schritte umfasst, die aus Folgendem bestehen:
(a) anhand einer Analyse des Verkehrs in dem oder den in dem vordefinierten Gebiet (16) vorhandenen Netzen, die mit Hilfe mindestens einer Verkehrsanalyseeinheit durchgeführt wird, die sich in diesem Gebiet befindet und eine in Abhängigkeit von dem abzudeckenden Gebiet gewählte Reichweite aufweist, Detektieren, für jeden der Standards, mindestens eines Indikators, der für die Aktivität eines Endgeräts (14), das gemäß mindestens diesem Standard arbeitet, in diesem oder diesen Netzen repräsentativ ist,
(b) Ableiten, aus den so detektierten Indikatoren, einer Zählung der Anzahl von in dem Gebiet (16) vorhandenen zellularen Endgeräten (14),
(c) Schätzen der Anzahl von in dem Gebiet vorhandenen Personen anhand mindestens eines Korrelationsgesetzes zwischen der Anzahl von so gezählten zellularen Endgeräten (14) und der entsprechenden Anzahl von in dem Gebiet (16) vorhandenen Personen, **dadurch gekennzeichnet, dass** die Analyse des Verkehrs die Detektion eines Indikators umfasst, der einer Antwort auf eine Direktzugriffsanforderung eines zellularen Endgeräts (14) entspricht.

2. Verfahren nach dem vorhergehenden Anspruch, wobei die Analyse des Verkehrs die Detektion eines Indikators umfasst, der einer Netz-Direktzugriffsanforderung eines zellularen Endgeräts (14) entspricht.

3. Verfahren nach einem der vorhergehenden Ansprüche, wobei das Korrelationsgesetz anhand der Beobachtung realer Daten erstellt wurde, insbesondere durch das Anlernen eines neuronalen Netzes (21), wobei die Daten zum Anlernen insbesondere aus einer Bildanalyse und/oder aus einer manuellen Zählung stammen.

4. Verfahren nach einem der vorhergehenden Ansprüche, wobei die Analyse des Verkehrs ohne vorherige Entschlüsselung der Daten, die in den analysierten Netzen übertragen werden, erfolgt.

5. Verfahren nach einem der vorhergehenden Ansprüche, wobei die vordefinierten Kommunikationsstandards aus Folgenden gewählt werden: 2G, insbesondere GSM, 2,5G, 3G, insbesondere UMTS, 4G, insbesondere LTE, 5G, WiFi, BLUETOOTH.

6. Verfahren nach einem der vorhergehenden Ansprüche, wobei mindestens eines der zellularen Endgeräte (14) gemäß einem 2G-Kommunikationsstandard in dem Netz kommuniziert, wobei der während der Analyse gezählte Indikator die Anzahl von RR-IMMEDIATE-ASSIGNMENT-Nachrichten ist, die von einer Basisstation (15) als Antwort auf die im Netz erfassten Direktzugriffsanforderungen gesendet werden.

7. Verfahren nach einem der Ansprüche 1 bis 5, wobei mindestens eines der zellularen Endgeräte (14) gemäß einem 2,5G-Kommunikationsstandard in dem Netz kommuniziert, wobei der während der Analyse gezählte Indikator die Anzahl von PACKET-UPLINK-ASSIGNMENT-Nachrichten ist, die von einer Basisstation (15) als Antwort auf die im Netz erfassten Direktzugriffsanforderungen gesendet werden.

8. Verfahren nach einem der Ansprüche 1 bis 5, wobei mindestens eines der zellularen Endgeräte (14) gemäß einem 3G-, 4G- und/oder 5G-Kommunikationsstandard in dem Netz kommuniziert, wobei der während der Analyse gezählte Indikator die Anzahl von RRC-CONNECTION-SETUP-Nachrichten ist, die von einer Basisstation (15) als Antwort auf die im Netz erfassten Direktzugriffsanforderungen gesendet werden.

9. Verfahren nach einem der Ansprüche 1 bis 5, wobei mindestens eines der zellularen Endgeräte (14) gemäß dem WiFi-Kommunikationsstandard in dem Netz kommuniziert, wobei der während der Analyse gezählte Indikator die Anzahl von (association-request, probe-request)-Nachrichten und/oder die Anzahl unterschiedlicher MAC-Adressen, die mit diesem Netz verbunden ist, ist.

10. Verfahren nach einem der vorhergehenden Ansprüche, wobei die Verkehrsanalyseeinheit mindestens eine Antenne (12) umfasst, wobei die Verstärkung und/oder die Richtcharakteristik dieser Antenne gewählt wird, um das bestimmte geografische Gebiet abzudecken.

11. Verfahren nach einem der vorhergehenden Ansprüche, wobei die Detektion des oder der Indikatoren, die für die Aktivität eines Endgeräts repräsentativ sind, während einer bestimmten Messdauer, während der die Zählung der Anzahl dieser Indikatoren inkrementiert wird, kontinuierlich erfolgt, wobei das Verfahren einen Schritt des Dekrementierens dieser Zählung umfasst, wenn die Messdauer abgelaufen ist, wobei das Dekrementieren der Zählung der Anzahl von Indikatoren, die für die Aktivität eines Endgeräts (14) repräsentativ sind, insbesondere dadurch erfolgt, dass die Zählung neu initialisiert wird und/oder dass die Zählung um eine vordefinierte Anzahl dekrementiert wird.

12. Verfahren nach einem der vorhergehenden Ansprüche, wobei das bestimmte geografische Gebiet (16) ein mobiles Gebiet, insbesondere ein Eisenbahnwagen und/oder ein Bus, oder ein nicht mobiles Gebiet, insbesondere ein Bahnhof, ein Stadion und/oder ein Platz, ist.

13. Verfahren zur Detektion eines Personenstroms zwischen mindestens zwei nahe beieinander liegenden Gebieten, wobei in jedem der Gebiete eine Netzanalyseeinheit platziert ist, wobei das Verfahren die Schritte umfasst, die aus Folgendem bestehen:
- Schätzen der Anzahl von vorhandenen Personen und/oder von zellularen Endgeräten (14) in jedem der Gebiete durch Anwenden mindestens der Schritte (a) und (b) des Verfahrens nach einem der Ansprüche 1 bis 12,
- Vergleichen der in jedem der Gebiete geschätzten Werte, um daraus die Richtung und/oder die Stärke des Personenstroms zwischen den zwei Gebieten abzuleiten.

14. Vorrichtung (10) zur Schätzung der Anzahl von in einem bestimmten geografischen Gebiet (16) vorhandenen Personen, wobei mindestens ein Teil dieser Personen mit zellularen Endgeräten (14) ausgestattet ist, die in mindestens einem Netz kommunizieren, wobei die Kommunikation der Endgeräte gemäß mindestens zwei vordefinierten Kommunikationsstandards erfolgt, insbesondere zur Umsetzung des Verfahrens nach den Ansprüchen 1 bis 12, wobei die Vorrichtung Folgendes umfasst:
- einen lokalen Empfänger, der eine Verkehrsanalyseeinheit umfasst, die es gestattet, den Verkehr in mindestens einem Netz abzuhören und die Anzahl und die Art der nicht verschlüsselten Nachrichten, die darin übertragen werden, zu bestimmen,
- eine Schaltung zur Verarbeitung der aus dem Empfänger stammenden Daten, die zu Folgendem konfiguriert ist:
(a) anhand einer Analyse des Verkehrs in dem oder den in dem vordefinierten Gebiet vorhandenen Netzen, die mit Hilfe mindestens einer Verkehrsanalyseeinheit durchgeführt wird, die sich in diesem Gebiet befindet und eine in Abhängigkeit von dem abzudeckenden Gebiet gewählte Reichweite aufweist, Detektieren, für jeden der Standards, mindestens eines Indikators, der für die Aktivität eines Endgeräts, das gemäß mindestens einem dieser Standards arbeitet, in diesem oder diesen Netzen repräsentativ ist,
(b) Ableiten, aus den so detektierten Indikatoren, einer Zählung der Anzahl von in dem Gebiet (16) vorhandenen zellularen Endgeräten (14),
(c) Schätzen der Anzahl von in dem Gebiet vorhandenen Personen anhand mindestens eines Korrelationsgesetzes zwischen der Anzahl von so gezählten zellularen Endgeräten (14) und der entsprechenden Anzahl von in dem Gebiet (16) vorhandenen Personen, **dadurch gekennzeichnet, dass** die Analyse des Verkehrs die Detektion eines Indikators umfasst, der einer Antwort auf eine Direktzugriffsanforderung eines zellularen Endgeräts (14) entspricht.

15. Fahrzeug oder Raum für den Empfang von Publikum, das/der mit einer Vorrichtung (10) nach dem vorhergehenden Anspruch ausgerüstet ist, wobei die Antenne (12) so konfiguriert ist, dass ihre Abdeckung mit der Ausdehnung des Gebiets des Fahrzeugs oder des Raums, das/der die Personen empfängt, im Wesentlichen übereinstimmt.

## Claims

1. Method for estimating the number of people present in a given geographical area (16), at least some of these people being equipped with cellular terminals (14) communicating on at least one network, the terminals (14) communicating in accordance with at least two predefined communication standards, the method comprising the steps of:
(a) detecting, from an analysis of the traffic on the one or more networks present in said predefined area (16), performed using at least one traffic analyser located in this area and with a range chosen depending on the area to be covered and for each of said standards, at least one indicator representative of the activity of a terminal (14) on this or these one or more networks and operating in accordance with at least this standard,
(b) deducing, from the indicators thus detected, a count of the number of cellular terminals (14) present in the area (16),
(c) estimating the number of people present in said area, based at least on a correlation law between the number of cellular terminals (14) thus counted and the corresponding number of people present in said area (16), **characterized in that** the traffic analysis comprises detecting an indicator corresponding to a response to a random access request from a cellular terminal (14).

2. Method according to the preceding claim, the traffic analysis comprising detecting an indicator corresponding to a request for random access to the network from a cellular terminal (14).

3. Method according to either one of the preceding claims, the correlation law having been generated from the observation of real data, in particular by training a neural network (21), the data used for the training stemming in particular from image analysis and/or a manual count.

4. Method according to any one of the preceding claims, the traffic analysis being performed without prior decryption of the data transiting on networks under analysis.

5. Method according to any one of the preceding claims, the predefined communication standards being chosen from among the following: 2G, in particular GSM, 2.5G, 3G, in particular UMTS, 4G, in particular LTE, 5G, Wi-Fi, Bluetooth.

6. Method according to any one of the preceding claims, at least one of the cellular terminals (14) communicating in accordance with a 2G communication standard on the network, the indicator counted during the analysis being the number of RR IMMEDIATE ASSIGNMENT messages sent by a base station (15) in response to the random access requests identified on the network.

7. Method according to any one of Claims 1 to 5, at least one of the cellular terminals (14) communicating in accordance with a 2.5G communication standard on the network, the indicator counted during the analysis being the number of PACKET UPLINK ASSIGNMENT messages sent by a base station (15) in response to the random access requests identified on the network.

8. Method according to any one of Claims 1 to 5, at least one of the cellular terminals (14) communicating in accordance with a 3G, 4G and/or 5G communication standard on the network, the indicator counted during the analysis being the number of RRC CONNECTION SETUP messages sent by a base station (15) in response to the random access requests identified on the network.

9. Method according to any one of Claims 1 to 5, at least one of the cellular terminals (14) communicating in accordance with the Wi-Fi communication standard on the network, the indicator counted during the analysis being the number of (association-request, probe-request) messages and/or the number of different MAC addresses connected to this network.

10. Method according to any one of the preceding claims, the traffic analyser comprising at least one antenna (12), the gain and/or the directivity of this antenna being chosen so as to cover the given geographical area.

11. Method according to any one of the preceding claims, the one or more indicators representative of the activity of a terminal being detected continuously for a given measurement time, during which the count of the number of these indicators is incremented, the method comprising a step of decrementing this count when the measurement time has elapsed, the count of the number of indicators representative of the activity of a terminal (14) being decremented in particular by reinitializing the count and/or by decrementing the count by a predefined number.

12. Method according to any one of the preceding claims, the given geographical area (16) being a moving area, in particular a train formation and/or a bus, or a non-moving area, in particular a station, a stadium and/or a plaza.

13. Method for detecting a flow of people between at least two nearby geographical areas, a network analyser being placed in each of the areas, the method comprising the steps of:
- estimating the number of people present and/or cellular terminals (14) in each of said areas by applying at the very least steps (a) and (b) of the method according to any one of Claims 1 to 12,
- comparing the estimated values in each of the areas in order to deduce therefrom the orientation and/or the intensity of the flow of people between the two areas.

14. Device (10) for estimating the number of people present in a given geographical area (16), at least some of these people being equipped with cellular terminals (14) communicating on at least one network, the terminals communicating in accordance with at least two predefined communication standards, in particular for implementing the method according to Claims 1 to 12, the device comprising:
- a local receiver comprising a traffic analyser for listening to the traffic on at least one network and for determining the number and the nature of the unencrypted messages transiting thereon,
- a circuit for processing data from the receiver, configured so as to:
(a) detect, from an analysis of the traffic on the one or more networks present in said predefined area, performed using at least the traffic analyser located in this area and with a range chosen depending on the area to be covered and for each of said standards, at least one indicator representative of the activity of a terminal on this or these one or more networks and operating in accordance with at least one of said standards,
(b) deduce, from the indicators thus detected, a count of the number of cellular terminals (14) present in the area (16),
(c) estimate the number of people present in said area, based at least on a correlation law between the number of cellular terminals (14) thus counted and the corresponding number of people present in said area (16), **characterized in that** the traffic analysis comprises detecting an indicator corresponding to a response to a random access request from a cellular terminal (14).

15. Vehicle or public reception room equipped with a device (10) according to the preceding claim, the antenna (12) being configured such that its coverage substantially coincides with the extent of the area of the vehicle or the room receiving people.
